# EUROPÄISCHE PATENTSCHRIFT

(11) **EP 0 440 766 B1**
(45) Veröffentlichungstag und Bekanntmachung des Hinweises auf die Patenterteilung: **12.01.1994**
(21) Anmeldenummer: 90912613.8
(22) Anmeldetag: 25.08.1990
(51) Int. Cl.: G01B 11/04, G01D 5/34

(54) **KANTENFÜHLER**
EDGE SENSOR
DETECTEUR DE BORDS

(30) Priorität: 25.08.1989 DE 3928159
(43) Veröffentlichungstag der Anmeldung: 14.08.1991
(73) Patentinhaber: Erhardt & Leimer GmbH, D-86136 Augsburg (DE)
(72) Erfinder: BRUNNER, Gerhard, D-8900 Augsburg 21 (DE); KRAUTH, Wolfgang, D-8904 Friedberg (DE)
(74) Vertreter: Sasse, Volker, Dipl.-Ing.
(86) Internationale Anmeldenummer: EP9001425
(87) Internationale Veröffentlichungsnummer: WO9102941

(56) Entgegenhaltungen:
- DE-A- 1 952 630
- DE-A- 3 317 057
- DE-A- 3 423 308
- US-A- 3 204 109
- US-A- 3 495 089
- US-A- 3 934 148
- US-A- 4 157 477

## Beschreibung

Die Erfindung betrifft einen Kantenfühler der im Oberbegriff des Patentanspruchs 1 angegebenen Art.

Die Verwendung eines aktiven Empfängerelementes aus einem Kunststoff mit lichtsammelnden Eigenschaften ist für solche Kantenfühler aus der DE-33 17 057 C2 bekannt. Hier ist das Empfängerelement als Folie oder biegsame Platte ausgebildet, die im Inneren einer sich über die Länge des Empfängerelements erstreckenden, diese einkapselnden lichtdurchlässigen Halterung mit der Lichteintrittsfläche auf das Licht ausgerichtet positioniert ist. Dieses aus einer Folie oder Platte rohrförmig gebogene Teil weist keine geschlossene Rohrform auf und somit fehlt ihm die stabile und selbsttragende Form. Außerdem geht dem Lichtleitteil durch die geöffnete rohrförmige Form an der offenen Kante ein erheblicher Lichtanteil verloren. Die Halterung dient nicht nur zum Positionieren des Empfängerelementes und zu dessen Schutz, sondern das Empfängerelement wird mittels der Halterung im Kantenfühler festgelegt. Nachteilig ist dabei, daß die lichtdurchlässige Halterung nicht nur einen Teil des für das Empfängerelement bestimmten Lichtes absorbiert, sondern einen vielteiligen und komplizierten Aufbau des Kantenfühlers bedingt. Die Halterung wird nämlich mit speziell angepaßten Befestigungselementen im Kantenfühler festgelegt und positioniert. Der komplizierte Aufbau ist schließlich auch im Hinblick auf die üblicherweise beschränkten Platzverhältnisse unerwünscht. Nicht zuletzt trübt eine als Halterung dienende Glasröhre schneller ein und läßt das auftreffende Licht ungenügend und ungleichmäßig durch.

Aus der US-A-39 34 148 ist zwar ein selbsttragendes Stangenmaterial zur Lichtaufnahme bekannt, das sowohl als Längsstab wie als Rundstab vorgeschlagen wird. Dieses Stabmaterial besitzt aber einen Material-Vollquerschnitt, aus dem das Licht nur ungenügend heraustritt. In dieser Druckschrift hat man noch nicht den Vorteil der schmalen Kante zur Lichtabgabe erkannt.

DE 3 423 308 offenbart einen Kantenfühler, mit einer Langstreckenlichtquelle und einem darauf ausgerichteten Empfänger, der aus voneinender getrennten Einzelstücken besteht.

Der für die Herstellung des Empfängerelementes verwendete, lichtsammelnde Kunststoff ist beispielsweise im Merkblatt KL 47310 vom 01.03.1981 der Firma Bayer AG ausführlich beschrieben. Es handelt sich dabei um fluoreszierend eingefärbte, lichtsammelnde und lichtleitende Polymere von hoher optischer Reinheit. Darin bildet der transparente Kunststoff mit einem Fluoreszenzfarbstoff ein System, das direktes oder diffuses Licht absorbiert und in der Kunststoff-Matrix als Fluoreszenzstrahlung emittiert. Wenn der Kunststoff in Plattenform vorliegt, wird das absorbierte Licht durch Totalreflexion an die Kante der Platte transportiert und dort abgegeben. Die gute Totalreflexion bedingt eine verhältnismäßig dünne Plattenstärke.

Der Erfindung liegt die Aufgabe zugrunde, einen Kantenfühler der eingangs genannten Art zu schaffen, der sich durch einen platzsparenden und erheblich vereinfachten Aufbau und eine verbesserte Lichtausnutzung auszeichnet.

Die gestellte Aufgabe wird erfindungsgemäß durch die im Patentanspruch 1 angegebenen Merkmale gelöst.

Der selbsttragende, langgestreckte Rohrkörper aus lichtsammelndem Kunststoff läßt sich ohne nennenswerten baulichen Aufwand direkt halten, wodurch eine zusätzliche Halterung zum Positionieren und Stützen des Formteils als Empfängerelementes entfällt. Dank seiner selbsttragenden Eigenschaft benötigt der langgestreckte Rohrkörper keinen Schutz gegen eine Berührung mit der Bahn, weil er die dabei auftretenden Kräfte ohne weiteres verkraftet. Die selbsttragende Ausbildung als Rohrkörper hat ferner den Vorteil eines gesteigerten, lichtsammelnden und verstärkenden Effekts. Zusammen mit der Maßnahme, den selbsttragenden Rohrkörper aus lichtsammelndem Kunststoff der abzutastenden Bahn direkt, d.h. ohne irgendwelche Schutzelemente, gegenüberzustellen, führt durch das ungehindert auftreffende Licht zu einer gesteigerten Leistung des Empfängerelementes, so daß mit geringerem Energieaufwand als bisher ausgekommen wird. Der Materialmehraufwand für die selbsttragende Rohrkörperausbildung wird bei weitem durch die Einsparung gesonderter Halterungen und der Lagerungsteile gerechtfertigt. Dazu kommt eine einfache Montage und Wartung, weil der Rohrkörper wie ein starres Element im Empfänger zu handhaben ist. Unerwarteterweise erbringt der selbsttragende Rohrkörper aus lichtsammelndem Kunststoff ein verbessertes Ansprechverhalten auf Lichtänderungen und eine hohe Resistenz gegen mechanischen Verschleiß. Er kann in jeder beliebigen Länge von einem Endlosprofil abgeschnitten und an die jeweiligen Einsatzbedingungen angepaßt werden. Auf diese Weise wird der Herstellungsaufwand und werden die Herstellungskosten drastisch reduziert. Außerdem hat die Rohrausführung den zusätzlichen Vorteil des geringen Gewichtes in bezug auf hohe Festigkeit. Sie läßt sich deshalb auch leichter montieren.

Eine besonders wichtige Ausführungsform mit eigenständiger erfinderischer Bedeutung geht aus Anspruch 2 hervor. Im Hinblick auf das Bestreben, Kantenfühler so einfach, kostengünstig und robust wie möglich herzustellen, erfüllt die Verwendung eines handelsüblichen Leuchtstoffröhrengehäuses zur Halterung des Rohrkörpers alle Anforderungen. Solche Leuchten, die in verschiedenen Größen handelsüblich sind, sind preiswert und leicht zu montieren. Der Rohrkörper aus lichtsammelndem Kunststoff wird anstelle der sonst eingesetzten Leuchtstoffröhre eingebracht.

Sofern der langgestreckte Rohrkörper aus lichtsammelndem Kunststoff exakt den Abmessungen der ansonsten eingesetzten Leuchtstoffröhre entspricht, sind keine Modifikationen an den Röhrenhalterungen der Leuchte erforderlich. Um jedoch den speziellen Erforderungen bei der Unterbringung des Lichtaustritts und ggfs. der oder des Lichtdetektors Rechnung zu tragen, können die Röhrenhalterungen an die Enden des Rohrkörpers oder die Endkappen gemäß Anspruch 3 an die jeweiligen Halterungen oder Fassungen angepaßt sein.

Ein weiteres, zweckmäßiges Merkmal geht aus Anspruch 4 hervor. Eine Abdeckung dient zum Abschirmen von eventuell schädlichem Fremdlichteinfluß und erhöht den Wirkungsgrad des lichtsammelnden Kunststoffmaterials des Rohrkörpers. Lediglich das von der Lichtquelle auftreffende Licht dringt in das Empfängerteil ein und wird in dem besonderen Kunststoff zum Lichtdetektor transportiert. Hierbei bietet die Röhrenform besonderen Vorteil für den Lichttransport und für die Festigkeit.

Eine weitere wichtige Ausführungsform geht aus Anspruch 5 hervor. Ein Lichtgitter oder ein Linsenband verringert den Einfluß von Fremdlicht und sorgt zudem dazu, daß der Rohrkörper nur mit parallelen Lichtanteilen beaufschlagt wird, was die Abtastgenauigkeit erhöht. Das Lichtgitter oder das Linsenband hat zudem eine Schutzfunktion für den der Bahn unmittelbar gegenüberliegenden Rohrkörper.

Eine weitere, baulich einfache, robuste und kostengünstige Ausführungsform zum Abtasten einer Kante geht aus Anspruch 6 hervor. Der Kantenfühler besteht aus wenigen, kostengünstig und für die jeweiligen Anwendungszwecke einfach herstellbaren Komponenten. Die Leuchten bzw. Leuchtstoffröhrengehäuse sind handelsüblich und werden in der jeweils benötigten Größe beschafft und eingesetzt. Es ist sogar ausreichend, nur die Fassung auf dem Trägerprofil anzubringen, um sowohl die Lichtquelle wie auch das Empfängerelement zu setzen. Es ist dabei ausreichend, wenn der Kantenfühler nur den Warenbahnkantenbereich überfaßt. Durch den Wegfall komplizierter Positionier- und Halterungseinrichtungen ergeben sich kleine Abmessungen, die für die häufig beengten Platzverhältnisse an der Bahn günstig sind.

Alternativ dazu ist auch eine Ausführungsform zum Abtasten beider Kanten einer Bahn zweckmäßig, wie sie aus Anspruch 7 hervorgeht. Hier ist im Montagerahmen für jede Kante ein Paar solcher Lichtquelle-Empfängerelement-Einheiten vorgesehen, die durch das Anbringen von Fassungen auf dem Trägerprofil zu erreichen ist.

Es hat sich als besonders wichtig gezeigt, eine Ausführungsform gemäß Anspruch 8 auszubilden. Durch die U- oder parabolische Querschnittsform erhält das Trägerprofil eine größere Steifigkeit und kann deshalb leichter ausgebildet werden. Außerdem bieten die heraufgezogenen Wände einen Schutz gegen äußere Einflüsse für die Lichtquelle aber auch gerade für das Empfängerelement bzw. den Rohrkörper.

Ferner bietet sich die Form des Trägerprofils dazu an, als Reflektor für das Empfängerelement aber auch für die Lichtquelle zu dienen. Die dazu beschichtete Fläche reflektiert das Licht auf die gewünschte Zone. Insofern ist die Ausführung gemäß Anspruch 9 von besonderer Bedeutung.

Eine weitere, alternative Ausführungsform geht aus Anspruch 10 hervor. Hierbei arbeitet der Kantenfühler nach dem Reflexionsprinzip an nur einer Warenbahnseite. Bei den vorgenannten Ausführungsformen läßt sich das zweckmäßige Baukastenprinzip in gewinnbringender Weise anwenden, weil die einzelnen zum jeweiligen Typ des Kantenfühlers zusammengesetzten Komponenten einfach herstellbar sind und in den unterschiedlichsten Kombinationen genau zueinander passen. Dies vereinfacht die Herstellung, Reparaturen, die Lagerhaltung und den Versand.

Schließlich hat es sich als außergewöhnlich vorteilhaft erwiesen, eine Ausführung gemäß Anspruch 11 auszubilden. Das gemeinsame Befestigungsgehäuse für das Lichtsammelrohr, also das Empfängerelement und die Lichtquelle, lassen einen Vorrichtungsteil wie eine Baueinheit erscheinen, die einerseits sehr einfach sich darstellt, andererseits sehr klein bauend ausfällt und schließlich eine Konstanz in der Zuordnung der einzelnen Teile gewährleistet. Mit dem Gleitführungssitz des Befestigungsgehäuses auf dem Trägerprofil lassen sich das Empfängerelement und die Lichtquelle recht einfach und schnell auf die Warenbahnrandkante einstellen. Es braucht nur eine Stellschraube gelöst zu werden und das Befestigungsgehäuse kann frei auf dem Trägerprofil verschoben werden. Dies bietet sich vor allem an, wenn die Lichtquelle und das Empfängerelement einseitig gehaltene Teile sind, die wie eine Gabel über den Rand der Warenbahn fassen. Das freie Ende des rohrförmigen Körpers ist vorteilhafterweise abgerundet und verschlossen.

Anhand der Zeichnung werden beispielhaft Ausführungsformen des Erfindungsgegenstandes erläutert.

Es zeigt:
Figur 1 eine schematische Perspektivansicht eines Kantenfühlers,
Figur 2 eine Vorderansicht eines Teils eines Kantenfühlers,
Figur 3 eine Vorderansicht zweier weiterer Ausführungsformen,
Figur 4 einen schematischen Schnitt in der Ebene IV-IV von Fig.3,
Figur 5 eine weitere Ausführungsform in einem Schnitt,
Figur 6 eine andere Ausführungsform in einem Schnitt,
Figur 7 einen Detailschnitt,
Figur 8 einen weiteren Detailschnitt und
Figur 9 besondere Ausbildung des Kantenfühlers.

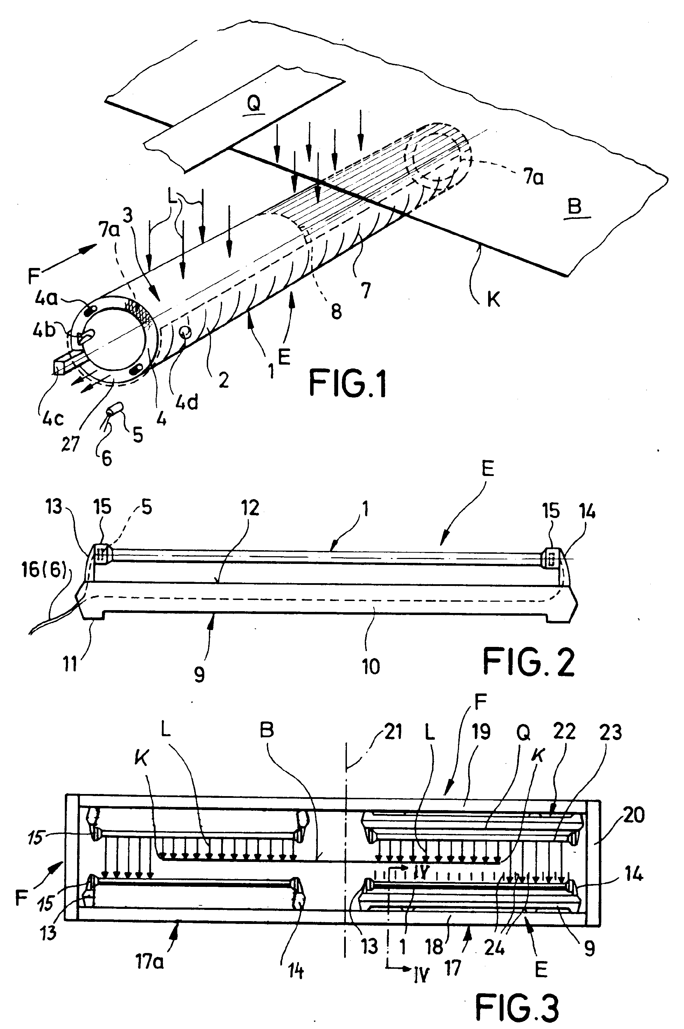

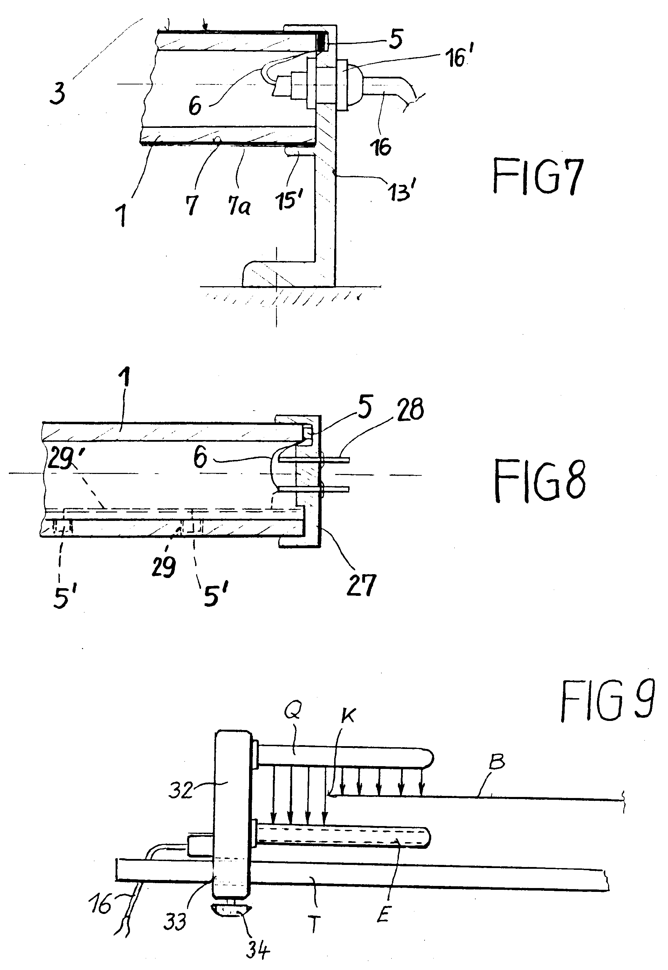

Zum Abtasten der Kante K einer laufenden Warenbahn B, z.B. in einer Bahnführungsvorrichtung bei der Warenbahnbearbeitung, ist eine Lichtquelle Q vorgesehen, die an einer Seite der Warenbahn B liegt und Licht L wie einen Vorhang auf die Warenbahn B richtet. An der gegenüberliegenden Seite der Warenbahn B ist ein Lichtempfängerteil E vorgesehen, das im wesentlichen einen langgestreckten Rohrkörper 1 in Rohrform enthält. Der Rohrkörper 1 besteht aus einem lichtsammelnden Kunststoff und ist selbsttragend ausgebildet. Die mit 3 bezeichnete Lichteintrittsfläche des Rohrkörpers 1 ist dem Licht L, das an der Kante K der Bahn B vorbeigeht, direkt ausgesetzt. Das Kunststoffmaterial 2 des Körpers 1 hat die Eigenschaft, das durch die Lichteintrittsfläche 3 eintretende Licht zu einem Lichtaustritt 4 (hier dem Stirnende des Körpers 1) durch Totalreflexion und Lichtverstärkung durch fluoreszierende Beimischungen im Kunststoff zu führen und dort abzugeben. Die Lichtkonzentration am Lichtaustritt 4 ist der Lage der Kante K im Fühlbereich proportional, so daß ein deutliches, zweckmäßigerweise analoges Nutzsignal an einem am Lichtaustritt 4 positionierten Lichtdetektor 5, z.B. einer Fotodiode oder Fotozelle, erzeugbar ist. In Fig. 1 ist angedeutet, daß die Warenbahn B einen längsschraffierten Bereich der Lichteintrittsfläche 3 abdeckt, der vom ausgesendeten Licht L nicht beaufschlagt wird. Zum Vermeiden von Fremdlichteinflüssen ist zweckmäßigerweise die Oberfläche des Körpers 1 außerhalb der Lichteintrittsfläche 3 mit einer Abdeckung oder Beschichtung 7 versehen, die auch an den Stirnenden des Körpers 1 vorgesehen und mit 7a bezeichnet ist. Die Innenumfangsfläche des Rohrkörpers 1 kann verspiegelt sein. Gemäß Fig. 7 kann der Rohrkörper 1 mit einem glasklaren Schrumpfschlauch 7' überzogen sein, der die Oberfläche schützt, die Abdeckung 7 fixiert und eventuelle Bohrungen verschließt.

Der Rohrkörper 1 läßt sich wie ein starres Bauteil an seinen Enden festlegen und benötigt keine Abstützungen oder Positioniereinrichtungen. Andere als runde Querschnittsformen, z.B. dreieckig, oval, viereckig sind ebenfalls möglich.

Der Lichtaustritt 4 kann auf verschiedene Weise ausgebildet sein. In Fig. 1 sind entweder in die Stirnendseite des Körpers 1 eingebrachte Sackbohrungen 4a oder nutenförmige Ausschnitte 4b oder klotzförmige Fortsätze 4c oder warzenartige Erhebungen an der Außen- oder Innenumfangsfläche vorgesehen, an denen der konzentrierte Lichtaustritt 4 stattfindet und wo der Lichtdetektor 5 bzw. ggfs. auch mehrere Lichtdetektoren 5 angebracht werden. Von jedem Lichtdetektor 5 führen Signalleitungen 6 über nicht dargestellte Verstärker- und Auswerteschaltungen zur Steuereinheit einer Bahnführungsvorrichtung, mit der die Bahn B bei Verlaufen ihrer Kante K wieder auf eine Sollauflinie zurückgeführt wird. In der Fig. 1 ist der Rohrkörper 1 des Empfängerelements E vom Kantenfühler F in nicht dargestellten Halterungen so festgelegt, daß er seine Lichteintrittsfläche 3 dem Licht L zuwendet. Strichliert ist bei 8 der Schlagschatten der Kante K auf der Lichteintrittsfläche 3 angedeutet. Auch können über die Länge des Rohrkörpers 1 verteilt Bohrungen 29 (Fig. 8) vorgesehen sein, in denen je ein Lichtdetektor 5' sitzt, um Lichtleitverluste zu kompensieren. Die Lichtdetektoren 5' sitzen an einer innen festgelegten Leiterplatte 29.

Fig. 2 verdeutlicht eine konkrete Ausführungsform eines Lichtempfängerteils E eines solchen Kantenfühlers F. Als Grundform und zum Halten des Rohrkörpers 1 aus lichtsammelndem Kunststoff dient hier ein handelsübliches Leuchtstoffröhrengehäuse 9, zweckmäßigerweise ein Feuchtraum-Leuchtengehäuse, das einen Grundkörper 10 mit Befestigungsstellen 11 und eine Oberseite 12 zum Anbringen ggfs. eines nicht gezeigten Reflektorschirms besitzt. Am Grundkörper 10 sind ferner übliche Röhrenhalterungen 13 und 14 mit Fassungen 15 für die Lichtquelle Q, somit an sich der Leuchtstoffröhre, vorgesehen. Mit den Röhrenhalterungen 13, 14 und den Fassungen 15 wird der Rohrkörper 1 gehalten, der dank seiner selbsttragenden Eigenschaften zwischen den Halterungen 13, 14 frei liegt. In beiden Röhrenhalterungen 13, 14 werden zweckmäßigerweise die Enden des Rohrkörpers 1 gehalten und sind Lichtdetektoren 5 untergebracht, die mittels der bei dem Leuchtstoffröhrengehäuse 9 ohnedies vorhandenen Versorgungsleitungen 16 an die Auswerteschaltung angeschlossen sind, so daß die von Haus aus vorgesehenen Leitungen als Signalleitungen 6 fungieren. Die Röhrenhalterungen 13, 14 und Fassungen 15 üblicher Leuchtstoffröhrengehäuse 9, die in unterschiedlichen gängigen Größen preiswert erhältlich sind, lassen eine einfache Montage des Körpers 1 und jederzeit wieder die Demontage zu.

Fig. 3 zeigt in der rechten Hälfte eine Ausführungsform eines Kantenfühlers F, der zum Abtasten nur einer Kante K der Bahn B bestimmt ist. In einem Montagerahmen 17 mit gabelförmiger Gestalt sind an den beiden Rahmenholmen 18, 19 zu beiden Seiten der Warenbahn B im Kantenbereich oben eine handelsübliche Leuchte 22 mit einer Leuchtstoffröhre 23 als Lichtquelle Q und der anderen Warenbahnseite zugewandt das handelsübliche Leuchtstoffröhrengehäuse 9 mit dem Rohrkörper 1 anstelle einer Leuchtstoffröhre angebracht. Ein Querholm 20 verbindet die Holme 18, 19 und gestattet es, den Kantenfühler F an der gewünschten Stelle der Holme B anzubringen. Der von der Warenbahn B nicht abgeschirmte Teil des Lichtes L trifft auf den selbsttragenden Rohrkörper 1 aus lichtsammelndem Kunststoff, der mit den Röhrenhalterungen 13, 14 in seiner Arbeitsposition festgelegt ist. Um Fremdlichteinfluß auszuschalten, kann beim Lichtempfängerteil E ein Lichtgitter 24 vorgesehen sein. Dieses schirmt den Rohrkörper 1 auch gegen eine direkte Berührung durch die Bahn B bei deren Durchhängen ab. Ggfs. ist auch vor der Leuchtstoffröhre 23 ein Lichtgitter 24 vorgesehen. Bei dem Kantenfühler F (rechte Hälfte der Fig. 3) für eine Bahnkante enden die Holme 18, 19 bei der strichpunktierten Trennlinie 21.

Ein Kantenfühler F zum gleichzeitigen Abtasten beider Kanten K der Bahn B (linke Hälfte der Fig. 3) (Mittenregelung) besitzt einen rechteckigen Rahmen 17a mit einer inneren lichten Weite, die größer als die Bahnbreite ist. Beiden Bahnkanten K ist dann jeweils ein Paar einer vorbeschriebenen Leuchte 22 mit einer Leuchtstoffröhre 23 und Leuchtstoffröhrengehäusen 9 mit Rohrkörpern 1 zugeordnet. Es ist nicht unbedingt erforderlich, ein Leuchtstoffröhrengehäuse 9 zu verwenden. Es reicht vollkommen aus, die Halterungen 13, 14 mit den Fassungen 15 direkt an dem Montagerahmen 17 festzulegen. Dabei besteht die Möglichkeit, die Halterungen 13, 14 in einem Gleitsitz und festgelegt mit einer Klemmschraube 34 zu halten, wie dies in Fig. 3 linke Seite angedeutet und später zu Fig. 9 näher beschrieben ist. Um eine Zerstörung der Lichtdetektoren 5 bei einer ungewollt falschen Montage von vornherein zu vermeiden, ist es sehr wichtig, die Rohrkörper 1 kürzer als die Leuchtstoffröhren 23 auszubilden, d.h. auch kürzere Gehäuse 9 vorzusehen als die Gehäuse der Leuchten 22. Damit können die Rohrkörper 1 mit schon installierten Lichtdetektoren 5 nicht versehentlich in die falschen Gehäuse eingesetzt werden. Diese Maßnahme ist auch deshalb zweckmäßig, weil die Leuchtkraft der Leuchtstoffröhren 23 ohnedies an den Enden abnimmt und das endseitige Licht besser gar nicht für die Abtastung eingesetzt zu werden braucht.

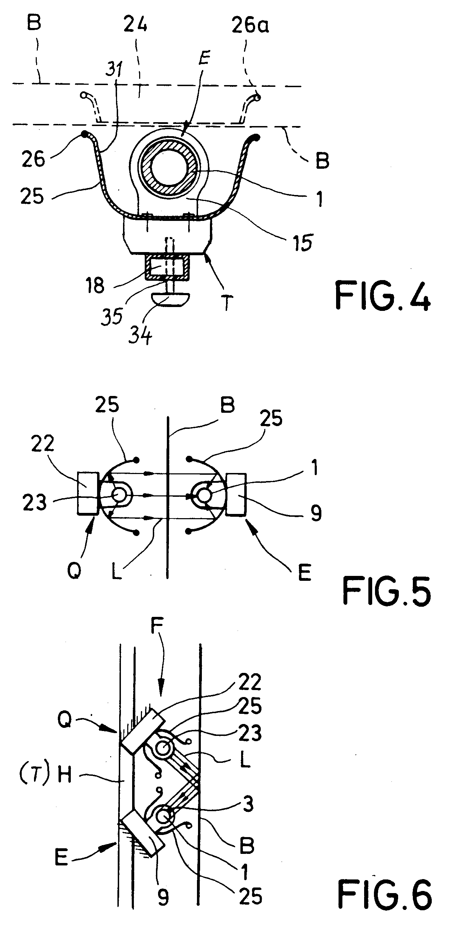

Fig. 4 deutet eine weitere Ausführungsform anhand eines Schnittes in der Ebene IV-IV von Fig. 3 an. Die Röhrenhalterung 14 ist mit der Fassung 15 am Rahmenholm 18 durch eine Klemmschraube 34 festgelegt, wobei diese Klemmschraube 34 durch einen Längsschlitz 35 im Rahmenholm 18 greift und darin als festlegbarer Gleitsitz geführt wird, so daß die Fassung 15 für das Empfängerteil E und auch für die Lichtquelle Q jeweils individuell für jede Lage eingestellt werden kann. Mittels der Röhrenhalterungen 14 hält es den Rohrkörper 1 der Bahn B (strichliert dargestellt) zugewandt. Zusätzlich ist gemäß Fig. 4 an der Röhrenhalterung 13, 14 oder am Rahmenholm 18 ein halbrunder oder parabolisch ausgebildeter Reflektorschirm 25 befestigt, dessen gerundete Ränder 26 zweckmäßigerweise höher liegen als die Oberseite des Rohrkörpers 1, so daß die durchhängende Bahn B dort aufliegen kann.

Weiterhin kann der Reflektorschirm 25 höher ausgebildet sein und das in Fig. 3 angedeutete Lichtgitter 24 enthalten, so daß ein zusätzlicher Schutz für den Rohrkörper 1 gegeben und Fremdlichteinfluß ausgeschaltet wird. Das Lichtgitter 24 hat den Vorteil, nur parallele Lichtstrahlen zum Rohrkörper 1 durchzulassen, wodurch sich die Fühlgenauigkeit erhöht. Beim Durchhängen der Bahn B kommt diese dann auf den Rändern 26a des höheren Reflektorschirms 25 oder auf dem Lichtgitter 24 zu liegen, ohne den Rohrkörper 1 zu berühren. Statt eines Lichtgitters läßt sich auch ein nicht dargestellter Linsenvorsatz, z.B. ein Linsenband, anbringen.

Fig. 5 ist als schematischer Schnitt zu Fig. 3 zu verstehen und zeigt sowohl die Lichtquelle Q wie auch das am Trägerprofil T festgelegte Empfängerelement E jeweils mit einem Reflektorschirm 25 der vorbeschriebenen Art. Dies hat den Vorteil, daß der Rohrkörper 1 aus lichtsammelndem Kunststoff über seinen gesamten Umfang mit dem auftreffenden Licht beaufschlagt wird, dessen indirekte Anteile durch den Reflektorschirm an die Rohrkörper-Oberfläche geleitet werden.

Bei der Ausführungsform gemäß Fig. 6 arbeitet der Kantenfühler F nach dem Reflexionsprinzip. An derselben Seite der Bahn B sind die Lichtquelle Q und das Empfängerelement E in einer Halterung H oder einem Trägerprofil T angebracht. Die Leuchtstoffröhre 23 ist in die handelsübliche Leuchte 22 mit dem Reflektorschirm 25 eingesetzt. Die Leuchte 22 ist schräggestellt, so daß das Licht L schräg auf die Bahn B auftrifft. Das Leuchtstoffröhrengehäuse 9, das den Rohrkörper 1 hält und ebenfalls einen Reflektorschirm 25 trägt, ist in der Halterung H ebenfalls schräggestellt, so daß das von der Bahn B reflektierte Licht L auf den Rohrkörper 1 trifft. Die Verwendung eines selbsttragenden Rohrkörpers 1 aus lichtsammelndem Kunststoff hat den Vorteil, daß keine Sonderteile zum Halten des Rohrkörpers 1 erforderlich sind. Handelsübliche Leuchten oder gar nur deren Fassung 15 zum Halten des Rohrkörpers 1 wie eine Leuchtstoffröhre sind kostengünstig und montagetechnisch einfach. Der Kantenfühler F wird nach dem Baukastenprinzip an die jeweiligen Anforderungen von vornherein angepaßt, wobei ein großer Teil der verwendeten Elemente Kaufteile sind. Der Rohrkörper 1 wird in der jeweiligen Länge zweckmäßigerweise von einem endlosen Profil abgeschnitten. Für eine breite, ausgerichtete Lichtverteilung können nachträglich Aluminium-Reflektorschirme 25 an der Leuchte 22 und dem Leuchtstoffröhrengehäuse 9 angebracht sein. Der Reflektorschirm 25 bietet dem selbsttragenden Rohrkörper 1 aus lichtsammelndem Kunststoff einen zusätzlichen Schutz. Ferner lassen sich Lichtgitter 24 zur Erhöhung der Genauigkeit der Lichtmengenmessung anbringen, die einen weiteren mechanischen Schutz und einen Staubschutz für den Rohrkörper 1 aus lichtsammelndem Kunststoff und auch für die Leuchtstoffröhre bieten. Da eine große Zahl der Elemente des Kantenfühlers F Kaufteile sind, lassen sich unterschiedlich ausgebildete Kantenfühler baukastenartig mit geringem Kostenaufwand herstellen und einsetzen. Der Herstellungsaufwand ist reduziert; die Lagerhaltung ist vereinfacht, der Versand läßt sich problemlos durchführen, weil ein Teil der Komponenten direkt am Einbauort beschafft werden kann. Feuchtraum-Leuchten als solche sind für den Einsatz bei der Kantenabtastung nasser oder feuchter Bahnen von vornherein geeignet, so daß zusätzliche Schutzmaßnahmen gar nicht mehr notwendig sind.

Gemäß Fig. 7 ist der Rohrkörper 1 mit an den Rohrdurchmesser angepaßten Halterungen 13' im Empfängerteil E festgelegt, so daß eine Lichteintrittsfläche 3 der Bahn B zugewandt ist. Die als Formteil ausgebildete Halterung 13' besitzt eine Fassung 15' für ein Ende des Rohrkörpers 1 und zur Unterbringung wenigstens eines Lichtdetektors 5. Die Signalleitungen 6 sind in einem Kabel 16 geschützt, das durch eine wasserdichte Tülle 16' nach außen führt. Der Lichteintrittsfläche 3 abgewandt ist die Abdeckung 7 am Rohrkörper 1 aufgebracht. Dies kann eine Verspiegelung oder eine lichtundurchlässige und ggfs. reflektierende Folie sein. Zum Schutz und zur Abdichtung sowie zum Fixieren der Abdeckung 7 ist der Rohrkörper 1 außen mit einer glasklaren Folie 7a überzogen, z.B. einem dünnen Schrumpfschlauch.

Fig. 8 zeigt, daß der Rohrkörper 1 wie eine herkömmliche Leuchtstoffröhre mit einer Endkappe 27 bestückt sein kann, die dann in die Halterung 13, 14 des Leuchtengehäuses 9 (Fig. 2) oder auch in die Halterung 13' (Fig. 7) paßt. In den Endkappen 27 können auch gleich Lichtdetektoren 5 positioniert sein, die über ihre Signalleitungen 6 an Kontaktstifte 28 angeschlossen sind. Diese Kontaktstifte 28 passen in die Kontaktstellen, z.B. der Fassung 15. Es ist nur wichtig, daß für die Kontaktpaarungen hochwertige, nicht oxidierende Materialien benutzt werden, um gleichbleibende Spannungs- oder Signalübergangsbedingungen zu sichern.

In Fig. 8 ist als weitere Variante angedeutet, über die Länge des Rohrkörpers 1 mehrere Lichtdetektoren 5' zu verteilen, um eventuelle Lichtleitverluste zu kompensieren. Die Lichtdetektoren 5' greifen in Bohrungen 29 des Rohrkörpers 1 und sitzen an einer im Inneren des Rohrkörpers 1 positionierten Leiterplatte 29'.

Fig. 9 zeigt eine gabelförmige Ausführung eines Kantenfühlers F, bei dem die Lichtquelle Q und das Empfängerteil E in einem Befestigungsgehäuse 32 gemeinsam einseitig festgelegt ist und die Warenbahn B von einer Kante K überfassen. Das Befestigungsgehäuse 32 sitzt in einer angedeuteten Gleitführung 33 längsverschiebbar auf dem Trägerprofil T und wird mit einer Klemmschraube 34 arretiert. Von dem Befestigungsgehäuse 32 führt die Versorgungsleitung 16 zu den nicht dargestellten Steuer- und Registriergeräten. Das Trägerprofil T ist U-förmig oder parabolisch im Querschnitt ausgebildet, umfaßt dabei bis annähernd zur Hälfte das Empfängerteil E, wobei die innere Oberfläche des Trägerprofils reflektierend beschichtet ist.

## Patentansprüche

1. Kantenfühler für eine laufende Warenbahn mit einer langgestreckten Lichtquelle und einem Lichtempfängerteil, das ein langgestrecktes Formteil aus einem fluoreszierendes Material enthaltenden, lichtsammelnden Kunststoff aufweist, das eine langgestreckte Lichteintrittsfläche hat, welche dem von der Lichtquelle auf die Warenbahn gerichteten Licht ausgesetzt ist und das stirnseitig wenigstens einen Lichtaustritt aufweist, an dem wenigstens ein Lichtdetektor vorgesehen ist, dadurch gekennzeichnet, daß das Formteil ein selbsttragender Rohrkörper (1) ist, das stirnseitig in Halterungen (13, 13', 14) an einem Grundkörper (10) festgelegt ist, der auf einem Trägerprofil (T) sitzt.

2. Kantenfühler nach Anspruch 1, dadurch gekennzeichnet, daß der Rohrkörper (1) anstelle einer Leuchtstoffröhre (23) mit seinen Enden (30) in den Halterungen (13, 13', 14) eines handelsüblichen Leuchtstoffröhrengehäuses (9) gehalten ist.

3. Kantenfühler nach Anspruch 1 oder 2, dadurch gekennzeichnet, daß an die Enden (30) des Rohrkörpers (1) Endkappen (27) mit Lichtdetektoren (5) und Anschlußkontakten (28), vorzugsweise aus nicht oxidierendem Material, aufgesteckt sind, und der Rohrkörper (1) mit diesen Endkappen (27) in den Halterungen (13, 13', 14) festgelegt wird.

4. Kantenfühler nach einem der Ansprüche 1 bis 3, dadurch gekennzeichnet, daß der Rohrkörper (1) außerhalb seiner Lichteintrittsfläche (3) eine lichtundurchlässige Beschichtung (7, 7a), vorzugsweise eine Verspiegelung, aufweist.

5. Kantenfühler nach einem der Ansprüche 1 bis 4, dadurch gekennzeichnet, daß zumindest das Lichtempfängerteil (E) bzw. der Rohrkörper (1) ein vorzugsweise geschwärztes Lichtgitter (24) oder einen Linsenvorsatz, beispielsweise ein Linsenband, vorgeordnet hat.

6. Kantenfühler nach Anspruch 1, dadurch gekennzeichnet, daß zum Abtasten nur einer Warenbahnkante (K) das Trägerprofil (T) als ein gabelförmiger, zumindest die Warenbahnkante (K) übergreifender Trägerrahmen (17) ausgebildet ist, dessen beide Rahmenholme (18, 19) zu beiden Seiten der Warenbahn (B) einerseits die Lichtquelle (Q) und andererseits das Leuchtstoffröhrengehäuse (9) mit dem Rohrkörper (1) trägt.

7. Kantenfühler nach Anspruch 1, dadurch gekennzeichnet, daß zum Abtasten beider Kanten (K) der Warenbahn (B) das Trägerprofil (T) ein rechteckiger Montagerahmen (17a) mit einer die Bahnbreite übersteigenden lichten Weite ist, an dessen Längsholmen (18, 19) gegenüberliegend Lichtquellen (Q) sowie Leuchtstoffröhrengehäuse (9) zur Aufnahme von Rohrkörpern (1) vorgesehen sind, die paarweise an jeder Kante (K) an beiden Seiten der Warenbahn (B) gegenüberliegen.

8. Kantenfühler nach mindestens einem der Ansprüche 1, 5 bis 7, dadurch gekennzeichnet, daß das Trägerprofil (T) einen U-förmigen oder parabolischen Querschnitt aufweist, innerhalb dessen das Lichtempfängerteil (E) bzw. der Rohrkörper (1) gehalten ist.

9. Kantenfühler nach mindestens einem der Ansprüche 1, 5 bis 8, dadurch gekennzeichnet, daß die innere Oberfläche (31) des Trägerprofils (T) mit einer reflektierenden Schicht belegt ist.

10. Kantenfühler nach einem der Ansprüche 1 bis 9, dadurch gekennzeichnet, daß in einer Halterung (H) auf einer Seite der Warenbahn (B) die Lichtquelle (Q) und ein Leuchtstoffröhrengehäuse (9) angebracht sind, wobei die Lichtquelle (Q) eine Leuchtstoffröhre (23) mit einem Gehäuse ist, das einen schräg gegen die Warenbahn (B) geneigten Reflektorschirm (25) aufweist, und das Leuchtstoffröhrengehäuse (9) den Rohrkörper (1) und einen Reflektorschirm (25) derart hält, daß die Lichteintrittsfläche (3) und der Reflektorschirm (25) auf das Reflexionslicht von der Warenbahn (B) ausgerichtet sind.

11. Kantenfühler nach einem der Ansprüche 1 bis 9, dadurch gekennzeichnet, daß der Rohrkörper (1) und die Lichtquelle (Q) gemeinsam von einem Befestigungsgehäuse (32) gehalten werden, welches in einer Gleitführung (33) auf dem Trägerprofil (T) gehalten ist.

## Claims

1. Edge sensor for a moving material web, comprising an elongated light source and a light-receiving part which has an elongated moulded part, which is made from a light-collecting plastic containing a fluorescent material and has an elongated light-entry surface which is exposed to the light directed from the light source onto the material web, and which moulded part has on the end face at least one light exit on which at least one light detector is provided, characterized in that the moulded part is a self-supporting tubular body (1) which is located at the end face in holders (13, 13', 14) on a base member (10) which is seated on a supporting section (T).

2. Edge sensor according to Claim 1, characterized in that the tubular body (1) is held instead of a fluorescent tube (23) with its ends (30) in the holders (13, 13', 14) of a commercially available fluorescent tube housing (9).

3. Edge sensor according to Claim 1 or 2, characterized in that end caps (27) with light detectors (5) and terminal contacts (28), preferably made from a non-oxidizing material, are plugged onto the ends (30) of the tubular body (1), and the tubular body (1) is located with these end caps (27) in the holders (13, 13', 14).

4. Edge sensor according to one of Claims 1 to 3, characterized in that outside its light-entry surface (3) the tubular body (1) has an opaque coating (7, 7a), preferably a silvering.

5. Edge sensor according to one of Claims 1 to 4, characterized in that a preferably blackened optical grating (24) or a lens attachment, for example a lens band, is arranged upstream of at least the light-receiving part (E) or the tubular body (1).

6. Edge sensor according to Claim 1, characterized in that for the purpose of scanning only one edge (K) of the material web the supporting section (T) is constructed as a fork-shaped supporting frame (17) which overlaps at least the edge (K) of the material web and whose two frame bars (18, 19) on either side of the material web (B) carry the light source (Q) on one side and the fluorescent tube housing (9) with the tubular body (1) on the other side.

7. Edge sensor according to Claim 1, characterized in that for the purpose of scanning both edges (K) of the material web (B) the supporting section (T) is a rectangular mounting frame (17a), which has a clear width exceeding the web width and on whose longitudinal bars (18, 19) there are provided opposite one another light sources (Q) and fluorescent tube housings (9) for accommodating tubular bodies (1), which are situated opposite one another in pairs at each edge (K) on either side of the material web (B).

8. Edge sensor according to at least one of Claims 1, 5 to 7, characterized in that the supporting section (T) has a U-shaped or parabolic cross-section within which the light-receiving part (E) or tubular body (1) is held.

9. Edge sensor according to at least one of Claims 1, 5 to 8, characterized in that the inner surface (31) of the supporting section (T) is coated with a reflecting layer.

10. Edge sensor according to one of Claims 1 to 9, characterized in that the light source (Q) and a fluorescent tube housing (9) are mounted in a holder (H) on one side of the material web (B), it being the case that the light source (Q) is a fluorescent tube (23) with a housing which has a reflector screen (25) obliquely inclined towards the material web (B) and that the fluorescent tube housing (9) holds the tubular body (1) and a reflector screen (25) in such a way that the light-entry surface (3) and the reflector screen (25) are aligned with the reflected light from the material web (B).

11. Edge sensor according to one of Claims 1 to 9, characterized in that the tubular body (1) and the light source (Q) are held in common by a mounting frame (32) which is held in a slideway (33) on the supporting section (T).

## Revendications

1. Détecteur de bords pour une nappe de tissu continue, avec une source lumineuse allongée et un élément récepteur de lumière, présentant une piéce moulée allongée en une matière plastique collectrice de lumière, qui comporte une matière fluorescente et a une surface d'incidence de la lumière allongée, exposée à la lumière dirigée par la source lumineuse sur la nappe de tissu, et dotée d'une sortie de lumière au moins côté frontal, sur laquelle est prévu un détecteur de lumière, au moins, caractérisé en ce que la pièce moulée est un corps tubulaire (1) autoporteur, fixé côté frontal dans des supports (13, 13', 14) sur un corps de base (10), qui repose sur un profilé porteur (T).

2. Détecteur de bords suivant la revendication 1, caractérisé en ce que le corps tubulaire (1), au lieu d'un tube fluorescent (23), est maintenu par ses extrémités (30) dans les supports (13, 13', 14) d'un boîtier de tube fluorescent (9) du commerce.

3. Détecteur de bords suivant l'une des revendications 1 et 2, caractérisé en ce que des capuchons (27), avec des détecteurs de lumière (5) et des contacts de jonction (28), en matériau non oxydant de préférence, sont emmanchés sur les extrémités (30) du corps tubulaire (1), le corps tubulaire (1) étant fixé par ces capuchons (27) dans les supports (13, 13', 14).

4. Détecteur de bords suivant l'une quelconque des revendications 1 à 3, caractérisé en ce que le corps tubulaire (1) présente une couche opaque (7, 7a), un tain de préférence, à l'extérieur de sa surface d'incidence de la lumière (3).

5. Détecteur de bords suivant l'une quelconque des revendications 1 à 4, caractérisé en ce qu'une grille de lumière (24), noircie de préférence, ou une lentille additionnelle, un ruban lenticulaire, par exemple, est disposée devant l'élément récepteur de lumière (E) et/ou le corps tubulaire (1).

6. Détecteur de bords suivant la revendication 1, caractérisé en ce que, pour le balayage d'un seul bord (K) de la nappe de tissu, le profilé porteur (T) est réalisé sous forme de cadre porteur (17) en fourche, qui recouvre le bord (K) de la nappe de tissu, du moins, et dont les deux longerons (18, 19) supportent, de part et d'autre de la nappe de tissu (B), la source lumineuse (Q), d'une part, le boîtier du tube fluorescent (9) avec le corps tubulaire (1), d'autre part.

7. Détecteur de bords suivant la revendication 1, caractérisé en ce que, pour le balayage des deux bords (K) de la nappe de tissu (B), le profilé porteur (T) est un cadre de montage (17a) rectangulaire, d'un diamètre intérieur supérieur à la largeur de la nappe, sur les longerons (18, 19) duquel sont prévues des sources lumineuses (Q) en vis-à-vis, ainsi que des boîtiers de tube fluorescent (9) pour recevoir les corps tubulaires (1), qui se situent à l'opposé, par paires, sur chaque bord (K), de part et d'autre de la nappe de tissu (B).

8. Détecteur de bords suivant l'une quelconque au moins des revendications 1, 5 à 7, caractérisé en ce que le profilé porteur (T) présente une section en U ou parabolique, à l'intérieur de laquelle est maintenu l'élément récepteur de lumière (E) et/ou le corps tubulaire (1).

9. Détecteur de bords suivant l'une quelconque au moins des revendications 1, 5 à 8, caractérisé en ce que la surface interne (31) du profilé porteur (T) est revêtue d'une couche réfléchissante.

10. Détecteur de bords suivant l'une quelconque des revendications 1 à 9, caractérisé en ce que la source lumineuse (Q) et un boîtier de tube fluorescent (9) sont montés dans un support (H), sur un côté de la nappe de tissu (B), la source lumineuse (Q) étant un tube fluorescent (23) avec un boîtier, qui présente un écran réflecteur (25) incliné à l'oblique par rapport à la nappe de tissu (B), le boîtier de tube fluorescent (9) maintenant le corps tubulaire (1) et un écran réflecteur (25), de sorte que la surface d'incidence de la lumière (3) et l'écran réflecteur (25) sont alignés sur la lumière réfléchie par la nappe de tissu (B).

11. Détecteur de bords suivant l'une quelconque des revendications 1 à 9, caractérisé en ce que le corps tubulaire (1) et la source lumineuse (Q) sont maintenus conjointement par un boîtier de fixation (32), retenu dans une glissière (33) sur le profilé porteur (T).
